# EUROPEAN PATENT SPECIFICATION

(11) **EP 2 644 484 B1**
(45) Date of publication and mention of the grant of the patent: **02.03.2016**
(21) Application number: 12186844.2
(22) Date of filing: 01.10.2012
(51) Int. Cl.: B62J 6/02, B62J 17/02, B60Q 1/00

(54) **Straddle-type type vehicle**
Grätschsitz-Fahrzeug
Véhicule de type à enfourcher

(30) Priority: 30.03.2012 CN 201210091436
(43) Date of publication of application: 02.10.2013
(73) Proprietor: Yamaha Hatsudoki Kabushiki Kaisha, Iwata-shi, Shizuoka 438-8501 (JP)
(72) Inventor: Chang, Jungwei, Chungli City (TW)
(74) Representative: Grünecker Patent- und Rechtsanwälte PartG mbB

(56) References cited:
- EP-A1- 2 179 912
- EP-A2- 2 599 697
- EP-A2- 2 644 485
- US-A1- 2007 025 114

## Description

The present invention relates to a straddle-type type vehicle according to the preamble of independent claim 1, and particularly to the configuration and construction of the position lamps of a straddle-type type vehicle. Such a straddle-type type vehicle can be taken from the prior art document US 2007/0025114 A1. In particular, said prior art document discloses a saddle-type vehicle with a front cover half having a front wall portion with a light opening in which a light unit is mounted. Said light unit is provided with a headlight and a pair of left and right position lamps. The headlight unit is provided with a housing coated with a reflector material for reflecting the light from the lamp bulb of the headlight and the lamp bulb of the position lamp. Said light unit is provided with an outer lens fitted and fixed to the lens opening, wherein said lens and the housing are common use among the headlight, the left and right flasher lamps, and the left and right positioning lamps.

Generally, for a straddle-type type vehicle, on a front cover or handle cover in front, a vehicle lamp used to illuminate the front side at night or in a dusky day during driving, and direction lamps showing turning directions of the vehicle during driving are provided. Moreover, a position lamp informing others of the existence of the vehicle is further disposed. In a situation that the head lamp is not lightened, by lightening the position lamp of the straddle-type type vehicle, a driver driving in an opposite oncoming vehicle or in a vehicle in front, or pedestrians may also know the existence of the straddle-type type vehicle through the light of the position lamp.

About the configuration of the head lamp and the position lamp, a configuration of the head lamp provided at the handle cover and the position lamp provided at the front cover exists. On the other hand, for the reason of enabling the head lamp to be enlarged, the head lamp is provided at the front cover while the position lamp is also provided on the front cover.

If the head lamp and the position lamp are provided at the front cover, the head lamp and the position lamp are closer.

In a straddle-type type vehicle whose head lamp and position lamp are both provided on a front cover in the prior art, conspicuity is fully considered only in the context of lightening the position lamp. However, conspicuity of the position lamp (that is, identification of the position lamp and the head lamp) in the context of lightening both the position lamp and the head lamp together is not fully considered. This is due to the reason that in the situation of lightening the head lamp and the position lamp together, regardless of the identification of the position lamp and the head lamp is not high, the entire conspicuity of the straddle-type type vehicle can also be fully ensured. Therefore, the necessity of identifying the head lamp and the position lamp is not realized, and as a result, in prior art straddle-type type vehicles, conspicuity of the position lamp lightened together with the head lamp is not high. The identification of the position lamp being not high in the situation of lightening the position lamp and the head lamp of the straddle-type type vehicle together is generally considered to be caused by the reason that, when the position lamp and the head lamp are both provided on the front cover, light of the head lamp whose light quantity is more than that of the position lamp enters eyes of others more easily.

In the straddle-type type vehicle whose head lamp and position lamp are both provided on the front cover, in order to improve the conspicuity of the position lamp in the situation of lightening the head lamp and the position lamp at the same time, a method of separating the head lamp from the position lamp as much as possible may be considered. However, for the straddle-type type vehicle, requirements for conciseness and miniaturization are very high so the configurable space is small. If in order to enable the identification in the situation of lightening the position lamp and the head lamp together to be improved, the head lamp and the position lamp are only simply separated, the front portion of the straddle-type type vehicle is enlarged, which is undesired as far as the design is concerned. Therefore, it is not easy to achieve conciseness and miniaturization of the straddle-type type vehicle and meanwhile improve the identification of the head lamp and the position lamp.

To enhance the conspicuity of the position lamp, an example is disclosed in JP 2009-181913 A. In JP 2009-181913 A, the position lamp light sources provided just below a vehicle head lamp light source are staggered towards the left and right directions of the vehicle relative to the vehicle head lamp light source, so the increase of the up-down size is reduced and meanwhile the ease of identifying the position lamp can be enhanced.

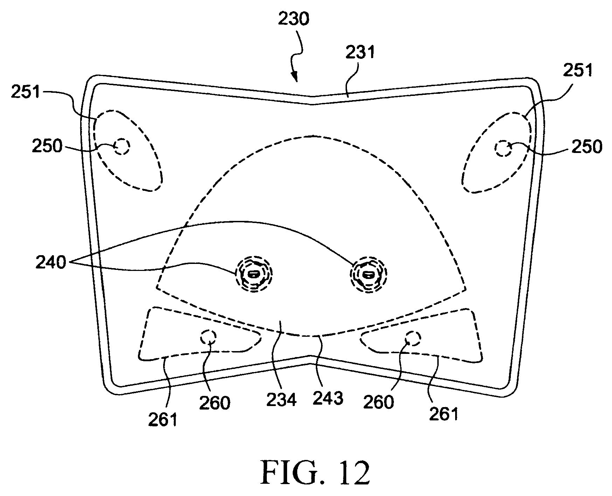

FIG. 12 is a front view showing a vehicle lamp unit 230 of the prior art. Specifically, as shown in FIG. 12, for the configuration in JP 2009-181913 A, a vehicle head lamp and a position lamp are arranged in a single shell 231 to construct a vehicle lamp unit 230, and a pair of left and right position lamp light sources 260 and reflectors 261 thereof are disposed at positions deviated towards the left and right of the width direction of the vehicle below a reflector 243 of a vehicle head lamp light source 240. Moreover, in the configuration shown in FIG. 12, a direction lamp 250 and a reflector 251 thereof are provided in the vehicle lamp unit 230.

However, in the configuration of JP 2009-181913 A, although the position lamp light sources 260 are deviated towards the left and right directions of the vehicle just below the vehicle head lamp light source, the problem of insufficient conciseness, miniaturization and identification still remains.

Specifically, the position lamp light sources 260 are located below the reflector 243 of the vehicle head lamp light source 240, so the vehicle lamp unit 230 is enlarged in the upward-downward direction. Moreover, although the position lamp light sources 260 are deviated, because the position lamp light sources 260 and the vehicle head lamp light source 240 are located in the shell 231, light is emitted from the integrally formed single lens 234; the head lamp reflector 243 and the position lamp reflector 261 overlapped largely in the upward-downward direction, so that the light emitted by the position lamp light source is easily disturbed by the light emitted by the vehicle lamp light source, and as a result, a configuration in which the identification of the position lamp can be enhanced to a preferable extent cannot be achieved.

In view of the foregoing situation, the present invention is proposed, with the objective of providing a straddle-type type vehicle which may consider conciseness and miniaturization of both the vehicle head lamp and the position lamp, and further pursue conciseness and miniaturization of the front portion of the vehicle, and conspicuity of the position lamp. Furthermore, according to the present invention, the approximate vehicle width of the straddle-type type vehicle may be identified by people around through the position lamp.

According to the present invention said object is solved by a straddle-type type vehicle having the features of independent claim 1. Preferred embodiments are laid down in the dependent claims.

Specifically, it is provided a straddle-type type vehicle, comprising: a head tube; a front cover provided in front of the head tube; left and right position lamp portions, provided on the front cover at opposite sides of a vehicle center in a width direction of the vehicle; a first lamp portion, provided on the front cover, with at least a part of the first lamp portion located between the left and right position lamp portions in the width direction of the vehicle, and lightened together with the left and right position lamp portions, wherein the left and right position lamp portions each include a position lamp light source, a position lamp reflector reflecting light of the position lamp light source, and a position lamp lens provided in front of the position lamp reflector; the first lamp portion includes a first lamp light source, a first lamp reflector reflecting light of the first lamp light source, and a first lamp lens provided in front of the first lamp reflector; moreover, the first lamp lens includes a lower edge located lower than the first lamp light source and the first lamp reflector in a front view of the vehicle; in the front view of the vehicle, left and right side edges, of the first lamp lens, located more outwards than the first lamp light source and the first lamp reflector extend downwards and inwards from an upper portion of the first lamp lens; at least a part of each of the position lamp light sources of the left and right position lamp portions is arranged between the first lamp light source and the lower edge of the first lamp lens in an upward-downward direction of the vehicle, and arranged between the left and right side edges of the first lamp lens and vertical lines passing through upper ends of the left and right side edges of the first lamp lens in a width direction of the vehicle; and the front cover includes protruding portions overlapped with straight lines respectively connecting the first lamp light source with the left and right position lamp light sources in the front view of the vehicle.

According to the present teaching described above, the front cover includes protruding portions overlapped with straight lines respectively connecting the first lamp light source with the left and right position lamp light sources in the front view of the vehicle, so it is difficult for the light emitted from the left and right position lamp portions to be disturbed by the light emitted from the vehicle head lamp, therefore conspicuity of the position lamp can be improved.

Moreover, in the front view of the vehicle, the left and right side edges of the first lamp lens are formed to extend downwards and inwards from the upper portion of the first lamp lens, and at least a part of each of the position lamp light sources of the left and right position lamp portions is arranged between each of the left and right side edges of the first lamp lens and vertical lines passing through the upper ends of the left and right side edges of the first lamp lens, so not only can the conspicuity of the light from the left and right position lamp portions be improved, but also the size of the front cover in the width direction of the vehicle can be reduced, and therefore, the straddle-type type vehicle which facilitate both the conciseness and miniaturization of the front portion of the vehicle, and improves conspicuity of the position lamp.

Moreover, conspicuity of the light from the left and right position lamp portions can be improved, so the approximate vehicle width of the straddle-type type vehicle can be identified by people around.

In a preferred embodiment, the position lamp light sources are all located at a position higher than the lower edge of the first lamp lens.

According to the present teaching described above, the position lamp light sources are both located at a position higher than the lower edge of the first lamp lens, so the size of the front cover in the upward-downward direction may be reduced further, and therefore conciseness and miniaturization of the front portion of the vehicle can be improved further.

In a preferred embodiment, according to the side view of the vehicle, at least a part of a lower edge of each of the position lamp lenses located lower than the position lamp light source and the position lamp reflector extends outwards in the width direction of the vehicle and extends upwards, and angles between side edges of the left and right position lamp portions and a horizontal line passing through the lowest end of the first lamp lens are respectively larger than angles between the lower edges of the position lamp and the horizontal line.

According to the present teaching described above, at least one part of the lower edge of the position lamp lens of each of the left and right position lamp portions extends outwards in the width direction of the vehicle and extends upwards, so that the size of the front cover in the width direction of the vehicle can be reduced.

Moreover, angles between side edges of the left and right position lamp portions and the horizontal line are respectively larger than angles between lower edges of the position lamp and the horizontal line, so that the transverse width of the front cover can be reduced. Therefore, after conspicuity of the position lamp is ensured to a better extent, the size of the front cover in the width direction of the vehicle can be further reduced, so as to further facilitate conciseness and miniaturization of the front portion of the vehicle.

In a preferred embodiment, in which in the front view of the vehicle, at least a part of the side edges of each of the position lamp lenses located more outwards than the position lamp light source and the position lamp reflector extends outwards in the width direction of the vehicle and extends upwards.

According to the present teaching described above, side edge of the position lamp lens of each of the left and right position lamp portions extends outwards and upwards, so the size of the front cover in the width direction of the vehicle may be reduced further, and therefore conciseness and miniaturization of the front portion of the vehicle can be sought further.

That is, if the side edge of the position lamp lens of each of the left and right position lamp portions only simply extends transversely, the vehicle width becomes larger. However, in the present teaching, the side edge of the position lamp lens is arranged obliquely, so that the size in the upward-downward direction and the size in the width direction of the vehicle may be reduced at the same time.

In a preferred embodiment, in which the position lamp light sources are provided with a plurality of LED light emitting elements, and in the front view of the vehicle, the more outwards located the LED light emitting elements are in the width direction of the vehicle, the higher the locations of the LED light emitting elements tend to be.

According to the present invention described above, the more outwards located the LED light emitting elements, as the position lamp light source, are in the width direction of the vehicle, the higher the locations of the LED light emitting elements tend to be, therefore, conciseness and miniaturization of the front portion of the vehicle can be improved further.

That is, if a plurality of light sources of the position lamp light source is only simply arranged transversely abreast, the width of the vehicle will be enlarged. However, in the present invention, the position lamp light source is arranged obliquely, so that the plurality of light sources of the position lamp light source can also be arranged obliquely, and the size in the upward-downward direction and the size in the width direction of the vehicle are reduced at the same time.

In a preferred embodiment, according to the side view of the vehicle, lower portions of the left and right position lamp portions include a part of a shape with a front end tapering off towards the inside in the width direction of the vehicle, and a lower portion of the protruding portion of the front cover also include a part of a shape with a front end tapering off towards the inside in the width direction of the vehicle.

According to a preferred embodiment described above, the lower portions of the left and right position lamp portions and the lower portions of the protruding portions each include a part of a shape with a front end tapering off towards the inside in the width direction of the vehicle, so the sizes of the lower portions of the left and right position lamp portions and the lower portions of the protruding portions are reduced, and therefore conciseness and miniaturization of the front portion of the vehicle can be improved further.

In a preferred embodiment, according to the side view of the vehicle, the left and right position lamp portions extend upwards and backwards, and at least a part of each of the protruding portion of the front cover is arranged between the left and right position lamp portions and the first lamp portion.

According to a preferred embodiment described above, the left and right position lamp portions extend upwards and backwards, so that miniaturization of the position lamp portion and the front cover in the length direction can be improved, and meanwhile conspicuity of the position lamp portions can be enhanced, and therefore, the front portion of the vehicle can be more concise and miniaturized. Moreover, the configuration of the protruding portion can enhance conspicuity of the position lamp in the side view of the vehicle.

In a preferred embodiment, according to the side view of the vehicle, the first lamp portion and the protruding portion include a part of a shape with a front end tapering off downwards and forwards, and the left and right position lamp portions are each provided with a part of a shape with a front end tapering off upwards and backwards.

According to a preferred embodiment described above, in the side view of the vehicle, the first lamp portion, the front portion of the protruding portion, and the rear portions of the left and right position lamp portions are each provided a part of a shape with the front end tapering off, so conspicuity of the position lamp can be ensured on one hand, and conciseness and miniaturization of the front portion of the vehicle are improved further on the other hand.

In a preferred embodiment, in which in the front view of the vehicle, no part of the front cover is provided below the first lamp portion and below the left and right position lamp portions.

According to a preferred embodiment described above, no part of the front cover is provided below the first lamp portion and below the left and right position lamp portions, so the size of the front cover in the upward-downward direction may be reduced so as to further facilitate conciseness and miniaturization of the front portion of the vehicle; and no part of the front cover is provided below the first lamp portion, so the illumination range below the head lamp is not hampered, and the head lamp can illuminate the ground near the front wheel of the vehicle more brightly.

In a preferred embodiment the left and right position lamp portions are respectively fixed at both the first lamp portion and the front cover.

According to a preferred embodiment described above, even if no part of the front cover is provided below the first lamp portion and below the left and right position lamp portions in order to facilitate a more concise and miniaturized front portion of the vehicle and eliminate the factor hampering the illumination below the head lamp, the lowering of the rigidity of the lower portion of the front portion of the vehicle due to such arrangement can be ensured through the left and right position lamp portions which function as connection members.

In a preferred embodiment, in which in the front view of the vehicle, outer ends of the left and right position lamp portions in the width direction of the vehicle are respectively located more outwards than left and right outer ends of the first lamp portion in the width direction of the vehicle.

According to a preferred embodiment described above, outer ends of the left and right position lamp portions in the width direction of the vehicle are respectively located more outwards than left and right outer ends of the first lamp portion in the width direction of the vehicle, so that they are closer to the outer edge of the front cover. As a result, conspicuity of the vehicle width indicated by the position lamp portion can be enhanced.

In a preferred embodiment, in which in the front view of the vehicle, outside edges of the front cover are configured so that lower portions thereof protrude more than upper portions thereof in the width direction of the vehicle, and the left and right position lamp portions are provided at protruding parts of the front cover.

According to the present teaching described above, conciseness and miniaturization of the front portion of the vehicle can be improved, while the left and right position lamp portions are provided at a part, of the front cover, protruding more outwards in the width direction of the vehicle, so that conspicuity of the vehicle width may be further enhanced.

**Accordingly, it is provided a preferred embodiment described above,** in which white system light is emitted by the first lamp portion, and white system light is emitted by the left and right position lamp portions.

### Brief description of the drawings

FIG. 1 is a side view of a scooter-type vehicle according to an embodiment;
FIG. 2 is a front view of the scooter-type vehicle according to the embodiment;
FIG. 3 is a top view of the scooter-type vehicle according to the embodiment;
FIG. 4 is a view showing a first lamp portion and left and right position lamp portions of the scooter-type vehicle according to the embodiment;
FIG. 5 is a view showing that a right half part of a first lamp lens of the first lamp portion and a position lamp lens of the right position lamp portion shown in FIG. 4 are removed;
FIG. 6 is a cross-sectional view in an arrow direction of a cross section formed along line A-A of FIG. 2;
FIG. 7 is an enlarged front view in which a front cover of the scooter-type vehicle is centered according to the embodiment;
FIG. 8 is an enlarged side view of a front portion of the scooter-type vehicle according to the embodiment;
FIG. 9 is a rear view showing the first lamp portion and the left and right position lamp portions of the scooter-type vehicle according to the embodiment;
FIG. 10 is an enlarged top view in which the front cover of the scooter-type vehicle is centered according to the embodiment;
FIG. 11 is an enlarged front view in which a front cover of a scooter-type vehicle is a center according to another embodiment; and
FIG. 12 is a front view showing a head lamp unit of the prior art.

### Detailed Description

Preferable embodiments of the present teaching are illustrated in detail below with reference to the accompanying drawings.

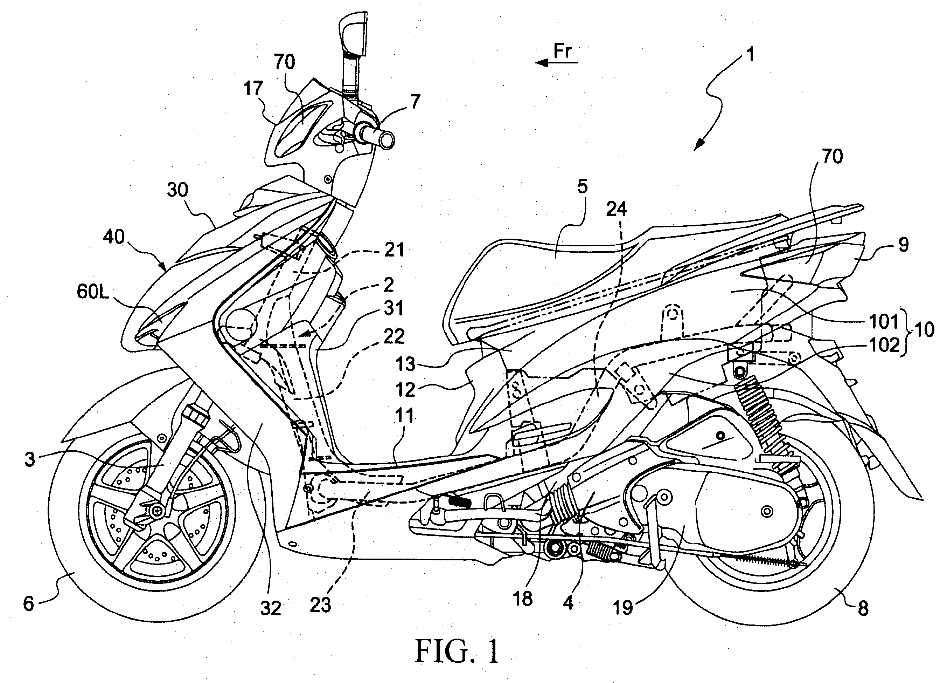

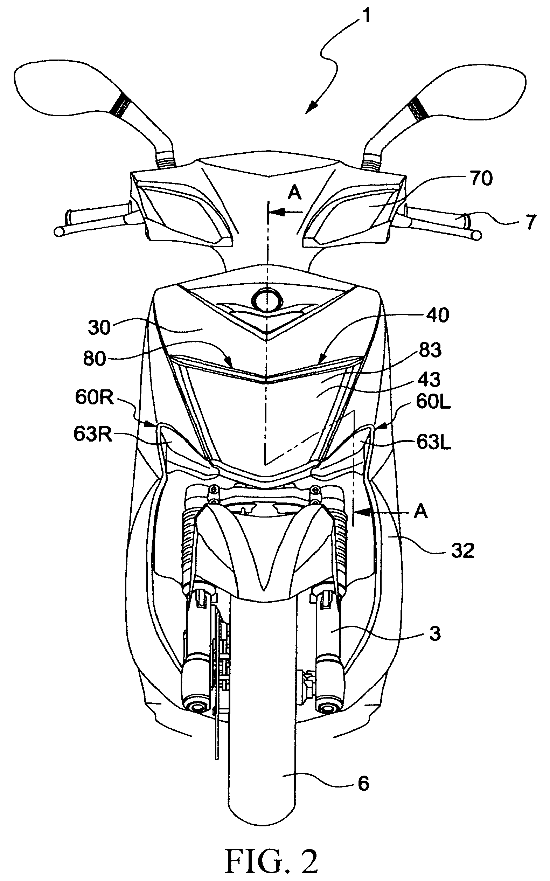

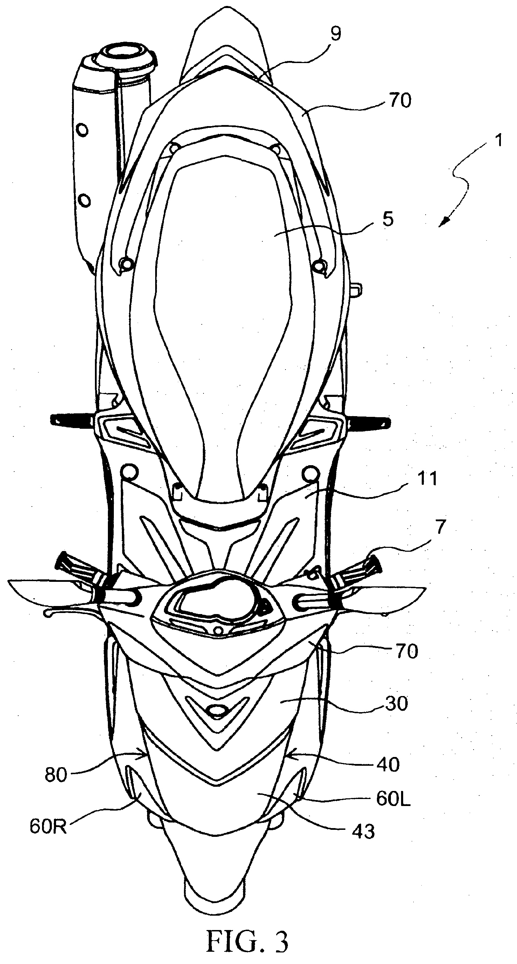

FIG. 1 is a side view of a scooter-type vehicle 1 according to an embodiment. FIG. 2 is a front view of the scooter-type vehicle 1 according to the embodiment. FIG. 3 is a top view of the scooter-type vehicle according to the embodiment. A straddle-type type vehicle of this embodiment shown in FIG. 1 is the scooter-type vehicle 1. However, the straddle-type type vehicle of the present invention is not limited to the scooter-type vehicle 1, and can be applied to other straddle-type type vehicles such as automatically three-wheeled vehicles, all terrain vehicles (ATV, four-wheeled off-road vehicle), electromotor vehicles, or a snowfield automotive vehicles. In the following illustration, front, rear, left and right directions respectively refer to front, rear, left and right directions from the viewpoint of a driver sitting in the scooter-type vehicle 1. Furthermore, the symbol FR in FIG. 1 denotes the front.

### <Vehicle entirety>

A front end portion of a backbone-type vehicle body frame 2 supports a front fork 3 to enable it to rotate toward the left or right, and a central portion of the vehicle body frame 2 supports a unit swinging-type power unit 4 to enable it to swing upwards and downwards. A seat 5 is mounted above the power unit 4 in a manner in which the seat 5 can open or close relative to a storage box 13 with a hinge pin of a front end portion thereof being the center.

The front fork 3 extends forwards and obliquely downwards. A lower end of the front fork 3 is equipped with a front wheel 6, and an upper end thereof is equipped with left and right steering handles 7. The rear end portion of the power unit 4 is equipped with a rear wheel 8 which is supported by the rear end portion of the power unit 4 in a rotatable way, and driven by the driving power of the power unit 4.

A lower cover 32 is provided around the front fork 3. Moreover, a side cover 10 is provided below the seat 5, and a footrest board 11 of a low floor type is provided between the lower cover 32 and the side cover 10. Moreover, a central cover 12 is provided between the rear end portion of the footrest board 11 and the lower part of the front portion of the seat 5.

The power unit 4 comprises, for example, an engine 18, and a triangular belt type continuously variable transmission, not shown, and is integrally constructed with a transmission case 19 extending toward the rear of the vehicle from the lateral side of the engine 18, and the engine 18 is arranged in a way that its cylinder shaft is approximately horizontal and directed forwards. Also, the engine 18 and the transmission case 19 may not be integrated, but are constructed individually.

### <Vehicle body frame 2>

Secondly, the entire construction of the foregoing vehicle body frame 2 will be illustrated. As shown in FIG. 1, the vehicle body frame 2 is equipped with a head tube (steering head) 21 supporting a steering shaft (not shown) connected to the front fork 3 in a rotatable way, a down tube 22 connected to the head tube 21 and extending backwards and downwards, a pair of left and right lower brackets 23 extending backwards from the lower portion of the down tube 22, and a pair of left and right seat rail frames 24 extending backwards and upwards from respective rear portions of the pair of left and right lower brackets 23 and supporting the seat 5 from below. Moreover, specifically, the lower brackets 23 and the seat rail frames 24 of the vehicle body frame 2 may be formed of, for example, a cylindrical tubular product.

### <Side cover 10>

As shown in FIG. 1, the scooter-type vehicle 1 comprises left and right side covers 10 for defining the left side and right side in the width directions of the vehicle regarding the space between the seat 5 and the power unit 4 .

As shown in FIG. 1, the side cover 10 is provided at the lateral sides of the vehicle body frame 2, and extends obliquely backwards and upwards without being overlapping with the rear wheel 8 in the side view. Moreover, the side cover 10 comprises an upper side cover 101 and a lower side cover 102. The upper side cover 101 and the lower side cover 102 are, for example, made of synthetic resin through injection molding.

In this embodiment, the upper side cover 101 and the lower side cover 102 are individual constructions (elements) respectively formed. However, the upper side cover 101 and the lower side cover 102 may be integrally formed as a one piece element.

Moreover, at the rear of the scooter-type vehicle 1, a tail lamp 9 is provided between the left and right side covers 10.

### <Front cover 30>

As shown in FIG. 1, the scooter-type vehicle 1 is equipped with a front cover 30 provided at a position in front of and higher than the footrest board 11, and arranged in front of the head tube 21. Moreover, the scooter-type vehicle 1 is equipped with a handle cover 17 arranged above the front cover 30, and covering the steering handle 7. Further, the scooter-type vehicle 1 is also equipped with a leg shield 31 provided above and at the rear of the down tube 22 and at the rear of the head tube 21, and a lower cover 32 provided below and in front of the down tube 22 and located above the front wheel 6. Also, the leg shield 31 and the lower cover 32 are conceptually categorized relative to the position of the front cover 30, so it is not indicated that the members must be individually formed. That is, the front cover 30, the leg shield 31, and the lower cover 32 may be separate parts, or more than two of them may also become a whole. Moreover, the members may also be formed of a plurality of members respectively. Also, one or more of the plurality of members and a part or all of the other members may also be integrated. In this embodiment, the front cover 30 and the lower cover 32 are integrated as a one piece element, while the leg shield 31 and the front cover 30 are formed separately.

Moreover, the lower cover 32 extends forwards and obliquely upwards from the front portion of the footrest board 11, and is located below and in front of the down tube 22 to cover the top of the front wheel 6. The lower cover 32 plays a role in mud prevention, preventing the feet of a driver from being splashed by water or mud kicked up by the front wheel 6.

### <Direction lamp 70>

The scooter-type vehicle 1 is provided with direction lamps 70 that show the turning directions of the vehicle during driving and are separately provided at a front portion and a rear portion of the vehicle. The direction lamps 70 are separately provided at the left and right sides of the vehicle center in the width direction of the vehicle. In the example shown in FIG. 1, a pair of direction lamps 70 is provided at the handle cover 17. Moreover, the example shown in FIG. 1 also shows that the direction lamps 70 provided at the rear portion of the vehicle are separately provided at the left and right sides with the tail lamp 9 provided in the middle. While the vehicle is being driven straight ahead, the direction lamps 70 are not lightened; when the driver intends to turn, and the direction lamps 70 corresponding to the direction the driver intends to turn are activated, the direction lamps 70 of the direction flashes. Therefore, the scooter-type vehicle 1 can inform others of the direction which the scooter-type vehicle 1 intends to turn. Furthermore, the direction lamps 70 are generally a lamp emitting orange system light.

The range of the orange system light mentioned herein is an overlapping part of the following regions, involving a chroma coordinate system of visible colors specified according to CIE (International Commission on Illumination):
boundary of green: y ≤ x - 0.12
boundary of red: y ≥ 0.39
boundary of white: y ≤0.79 - 0.67x

The overlapping part is the boundary range of the orange system light of the present teaching.

Each of the direction lamps 70 includes a direction lamp light source emitting light, a direction lamp reflector provided around the direction lamp light source to reflect light of the direction lamp light source, and a direction lamp lens provided in front of the direction lamp reflector in a manner that surrounds the periphery of the direction lamp reflector (none of which are shown in the drawing).

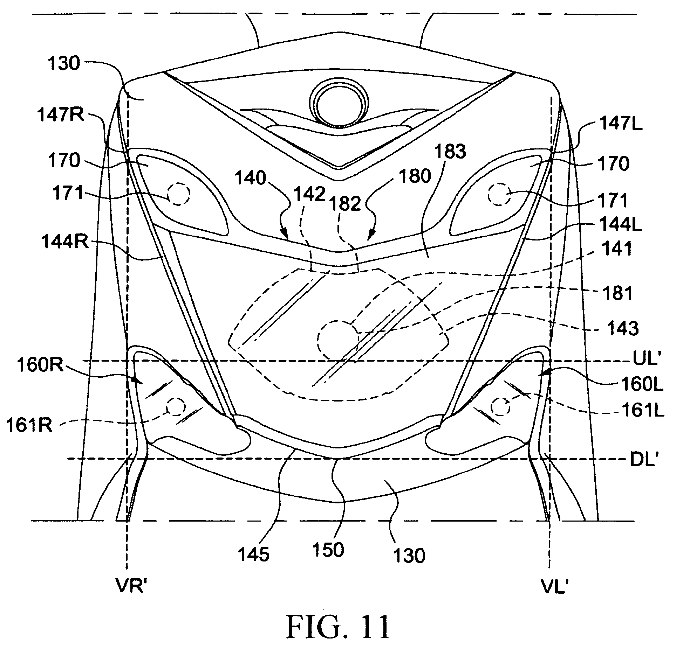

In the example shown in FIG. 1, although the direction lamps 70 at the front portion of the scooter-type vehicle 1 are provided at the handle cover 17, the direction lamp 70 at the front portion of the scooter-type vehicle 1 may also be provided at the front cover 30 in the present teaching. Moreover, as described in the following <other embodiments of the present teaching > and FIG. 11, the direction lamps 70 may also be disposed in the head lamp 80.

### <First lamp portion 40>

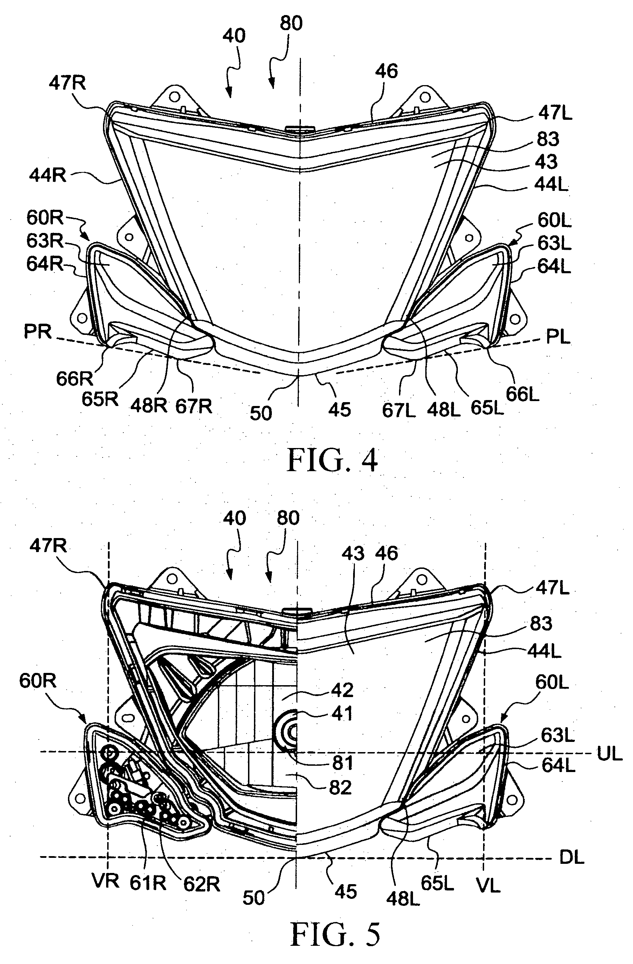

As shown in FIG. 2 and FIG. 4, in the scooter-type vehicle 1 of this embodiment, the first lamp portion 40 is provided on the front cover 30 at an approximately central position in the width direction of the vehicle. The first lamp portion 40 includes a head lamp 80 which is used to illuminate the front and inform others of the presence of the scooter-type vehicle 1 while driving during night or under dusky day conditions.

As described above, the direction lamps 70 at the front portion of the vehicle may also be provided at the front cover 30. When such configuration is adopted, the direction lamps 70 can be separately provided at the left and right sides of the vehicle center in the width direction of the vehicle and at positions other than the first lamp portion 40 on the front cover 30. Moreover, the head lamp 80 and the direction lamps 70 may also be integrated, and in the first lamp portion 40, the direction lamps 70 are separately provided at the left and right sides.

Also, the present teaching is applicable regardless of whether or not the direction lamps 70 are provided in the first lamp portion 40.

Moreover, as shown in FIG 5, the first lamp portion 40 includes a first lamp light source 41, a first lamp reflector 42 reflecting light of the first lamp light source 41, and a first lamp lens 43 provided in front of the first lamp reflector 42. In this embodiment, the head lamp light source 81, the head lamp reflector 82, and the head lamp lens 83 are the first lamp light source 41, the first lamp reflector 42, and the first lamp lens 43 respectively.

On the other hand, as described above, the direction lamps may also be provided at positions other than the first lamp portion on the front cover, specifically, they can be arranged as described in another embodiment of FIG. 11, wherein the head lamp 180 and the direction lamps 170 are integrated so that the direction lamps 170 are in the first lamp portion 140. In this case, the head lamp light source 181, the head lamp reflector 182, and the head lamp lens 183 are also the first lamp light source 141, the first lamp reflector 142, and the first lamp lens 143 of the present invention respectively. Generally, a lamp emitting white system light is used for the head lamp 80, 180.

The range of the white system light mentioned herein is an overlapping part of the following regions, involving a chroma coordinate system of visible colors specified according to CIE (International Commission on Illumination):
boundary of cyan: x ≥ 0.310
boundary of yellow: x ≤ 0.500
boundary of green: y ≤ 0.150 + 0.640x
boundary of green: y ≤ 0.440
boundary of purple: y ≥ 0.050 + 0.750x
boundary of red: y ≥ 0.382

The overlapping part is the boundary range of the white system light of the present invention.

As shown in FIG. 4 and FIG. 5, the first lamp lens 43 includes a lower edge 45 located lower than the first lamp light source 41 and the first lamp reflector 42, and left and right side edges 44L and 44R located more outwards than the first lamp light source 41 and the first lamp reflector 42. Moreover, the first lamp lens 43 also includes an upper edge 46 located higher than the first lamp light source 41 and the first lamp reflector 42.

### <Left and right position lamp portions 60L and 60R>

Then, as shown in FIG. 2, the scooter-type vehicle 1 of this embodiment is equipped with the left and right position lamp portions 60L and 60R respectively provided on the front cover 30 on the left side and the right side of the vehicle center in the width direction of the vehicle. The position lamp portions 60L and 60R are lightened during driving of the straddle-type type vehicle, and informing others of the presence and vehicle width of the straddle-type type vehicle. Generally, the lightening sequence of the scooter-type vehicle 1 is as follows: first the position lamp portions 60L and 60R are lightened and then the head lamp 80 is lightened. Therefore, basically, when the head lamp is lightened, the position lamp portions 60L and 60R are continue to be lightened. Furthermore, the left and right position lamp portions 60L and 60R generally emit white system light, which is the same as the head lamp 80. The white system mentioned herein is similar to what is described in the illustration about the first lamp portion 40. The color of the light emitted by the position lamp portion 60L and 60R is similar to that of the head lamp 80, so in a situation applicable to the configuration in the prior art, if the position lamp portions 60L and 60R and the head lamp 80 are lightened together, it would be difficult to identify the position lamp.

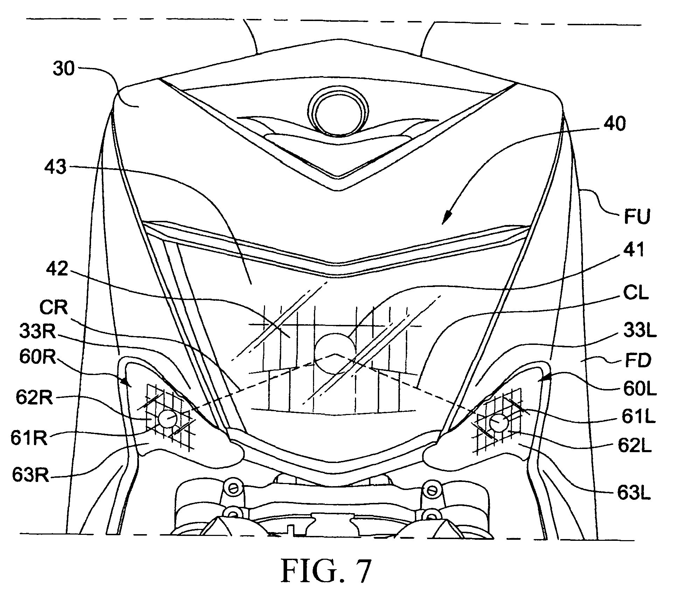

Likewise, as shown in FIGs 5 and 7, the position lamp portions 60L and 60R include position lamp light sources 61 L and 61 R, position lamp reflectors 62R, 62L reflecting light of the position lamp light sources 61L and 61R, and position lamp lenses 63R, 63L provided in front of the position lamp reflectors 62R, 62L.

The below illustration references FIG. 4 and FIG. 5 at the same time. FIG. 4 is a view showing a first lamp portion 40 and left and right position lamp portions 60L and 60R of the scooter-type vehicle 1 according to the embodiment. FIG. 5 is a view showing that a right half part of the first lamp lens 43 of the first lamp portion 40 and a position lamp lens 63R of the right position lamp portion 60R shown in FIG. 4 are removed. As shown in FIG. 4 and FIG. 5, the size of the first lamp lens 43 provided in front of the first lamp reflector 42 is larger than that of the first lamp reflector 42. In the front view of the vehicle, the outer edge of the first lamp lens 43 is also larger than the outer edge of the first lamp reflector 42. That is, in the front view of the vehicle, the first lamp reflector 42 is provided at the front cover 30 of the scooter-type vehicle 1 in a manner so that the outline thereof is located inside the outline of the first lamp lens 43. Therefore, in the front view of the vehicle, the lower edge 45 of the first lamp lens 43 is located lower than the first lamp reflector 42, and the side edges 44L and 44R of the first lamp lens 43 are located more outwards than the first lamp reflector 42.

Likewise, the sizes of the left and right position lamp lenses 63L and 63R provided in front of the left and right position lamp light sources 61L and 61 R are also larger than those of the left and right position lamp reflectors 62L and 62R respectively. Hence, in the front view of the vehicle, the outer edges of the left and right position lamp lenses 63L and 63R are located more outward with regard to the respective left and right position lamp light sources 61L and 61 R than the outer edges of the left and right position lamp reflectors 62L and 62R. That is, in the front view of the vehicle, the left and right position lamp reflectors 62L and 62R are provided at the front cover 30 of the scooter-type vehicle 1 in a manner so that the outlines thereof are located inside the outlines of the left and right position lamp lenses 63L and 63R. Therefore, in the front view of the vehicle, the lower edges 65L and 65R of the left and right position lamp lenses 63L and 63R are located lower than the position lamp reflectors 62L and 62R, and the side edges 64L and 64R of the left and right position lamp lenses 63L and 63R are located more outwards than the position lamp reflectors 62L and 62R.

### <Shape of first lamp portion 40>

As shown in FIG. 2, the first lamp portion 40 of this embodiment has a shape of a downward arrow in the front view of the vehicle. Specifically, regarding the first lamp portion 40 in the front view of the vehicle, the left and right side edges 44L and 44R (see FIG 4) of the first lamp lens 43 located more outwards than the first lamp light source 41 (see FIG 5) and the first lamp reflector 42 extend downwards and inwards from the upper portion of the first lamp lens 43. Moreover, regarding the first lamp lens 43 in the front view of the vehicle, the lower edge 45 located lower than the first lamp light source 41 and the first lamp reflector 42 extends inwards and obliquely downwards, towards the center of the vehicle width from the lower end of the left and right side edges 44L and 44R. In this embodiment, the lower edge 45 has an approximately flattened V shape. In the front view of the vehicle, the lowest position of the lower edge 45 is the lowest end 50 of the lower edge 45.

In this embodiment, in the front view of the vehicle, the angle between the side edges 44L and 44R of the first lamp lens 43 and the horizontal line DL passing through the lowest end 50 of the first lamp lens 43 is different from that between the lower edge 45 and the horizontal line DL passing through the lowest end 50 of the first lamp lens 43. Specifically, the side edges 44L and 44R of the first lamp lens 43 have a larger inclined angle relative to the horizontal line DL, while the lower edge 45 of the first lamp lens 43 has a smaller inclined angle relative to the horizontal line DL. The side edges 44L and 44R and the lower edge 45 are connected at the lower ends 48L and 48R of the side edges 44L and 44R respectively.

Furthermore, the angle between the side edges 44L and 44R of the first lamp lens 43 and the horizontal line DL passing through the lowest end 50 of the first lamp lens 43 is larger than the angle between the left half part or right half part of the lower edge 45 and the horizontal line DL passing through the lowest end 50 of the first lamp lens 43. The upper edge 46 of the first lamp lens 43 also extends inwards and obliquely downwards towards the center of the vehicle width from the upper ends 47L and 47R of the left and right side edges 44L and 44R. Likewise, the angle between the side edges 44L and 44R of the first lamp lens 43 and the horizontal line DL passing through the lowest end 50 of the first lamp lens 43 is also larger than the angle between the left half part or right half part of the upper edge 46 and a the horizontal line being parallel to the horizontal line DL passing through the lowest end 50 of the first lamp lens 43.

That is, the closer to the bottom the side edges 44L and 44R of the first lamp portion 40 are, the closer to the center in the width direction of the vehicle the side edges 44L and 44R are. Therefore, the size of the front cover 30 in the width direction of the vehicle necessary for configuring the first lamp portion 40 may be reduced, and therefore conciseness and miniaturization of the front portion of the vehicle may be improved. The angle between the left half part or right half part of the lower edge 45 and the horizontal line DL passing through the lowest end 50 of the first lamp lens 43 is larger than the angle between the left half part or right half part of the upper edge 46 and the horizontal line being parallel to the horizontal line DL passing through the lowest end 50 of the first lamp lens 43.

Moreover, in this embodiment, in the front view of the vehicle, the left and right side edges 44L and 44R extend downwards and inwards from the upper portion of the first lamp lens 43. Therefore, as shown in FIG. 5, in the front view of the vehicle, when the head lamp light source 81 is used as the reference, the parts of the side edges 44L and 44R of the first lamp portion 40 located higher than the head lamp light source 81 are more outward than the parts located lower than the head lamp light source 81.

### <Arrangement relationship between the first lamp portion 40 and the left and right position lamp portions 60L and 60R >

As described above, in this embodiment, the first lamp portion 40 and the left and right position lamp portions 60L and 60R are all provided on the front cover 30. It is preferable for the arrangement of the left and right position lamp portions 60L and 60R to be able to show the vehicle width, so it is preferable for the left and right position lamp portions 60L and 60R to be separately located at two sides of the first lamp portion 40, that is, it is preferable for the first lamp portion 40 to be located between the left and right position lamp portions 60L and 60R.

Moreover, it is not required that the entirety of the first lamp portion 40 be all located between the left and right position lamp portions 60L and 60R. An arrangement wherein at least a part of the first lamp portion 40 in the width direction of the vehicle is located between the left and right position lamp portions 60L and 60R is also favorable. Specifically, as shown in FIG. 2 and FIG. 4, in the front view of the vehicle, the left position lamp portion 60L is located more outwards than the left side edge 44L of the first lamp portion 40 in the vehicle width direction of the scooter-type vehicle 1, while the right position lamp portion 60R is located more outwards the right side edge 44R of the first lamp portion 40 in the vehicle width direction of the scooter-type vehicle 1. Moreover, as shown in FIG. 5, the right position lamp portion 60R is disposed in such a manner that at least a part of the position lamp light source 61 R is located between the right side edge 44R of the first lamp lens 43 and the vertical line VR passing through the upper end 47R of the right side edge 44R of the first lamp lens 43 (an angular region surrounded by the side edge 44R and the vertical line VR). Likewise, although not shown in FIG. 5, the left position lamp portion 60L is disposed in such a manner that at least a part of the position lamp light source 61 L is located between the left side edge 44L of the first lamp lens 43 and the vertical line VL passing through the upper end 47L of the left side edge 44L of the first lamp lens 43 (an angular region surrounded by the side edge 44L and the vertical line VL). The vertical lines VL and VR are both perpendicular to the horizontal line DL.

Moreover, regarding the upward-downward direction of the vehicle, the left and right position lamp portions 60L and 60R are disposed in such a manner that at least a part of each of the position lamp light sources 61 L and 61 R is located between the first lamp light source 41 and the lower edge 45 of the first lamp lens 43 in the upward-downward direction of the vehicle. Herein, being between the first lamp light source 41 and the lower edge 45 refers to a location between the horizontal line UL passing through the lower end of the first lamp light source 41 and the horizontal line DL passing through the lowest end 50 of the first lamp lens 43.

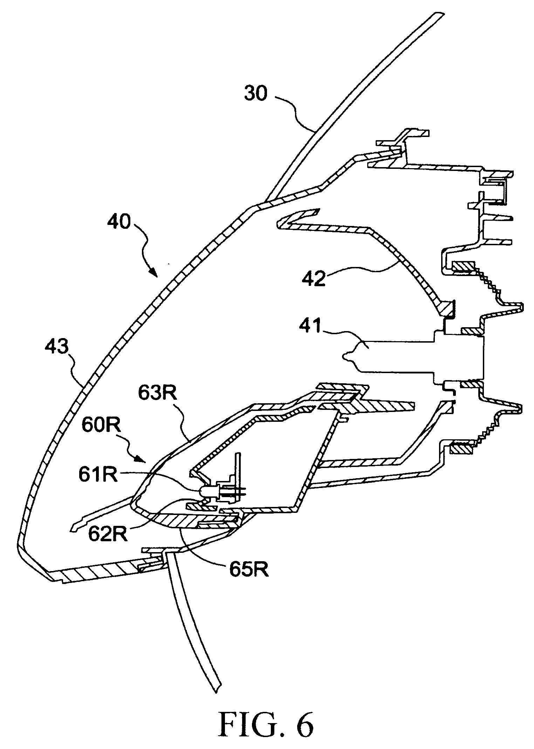

FIG. 6 is a cross-sectional view in an arrow direction of a cross section formed along line A-A of FIG. 2. FIG. 6 shows a positional relationship between the first lamp portion 40 and the position lamp portion 60R in the front-rear direction of the vehicle. Specifically, in the front-rear direction of the vehicle shown in FIG. 6, the position lamp light source 61 R is located in front of the first lamp light source 41, and the position lamp reflector 62R is also located in front of the first lamp reflector 42, while the position lamp lens 63R is located in the rear of the first lamp lens 43. Additionally, although the position lamp portion 60L is not shown in FIG. 6, the positional relationship between the position lamp portion 60L and the first lamp portion 40 in the vehicle length direction is the same as that between the first lamp portion 40 and the position lamp portion 60R.

According to the foregoing configuration, the left and right position lamp portions 60L and 60R are provided at a position close to the center in the width direction of the vehicle and below the left and right side edges 44L and 44R of the first lamp portion 40 respectively, so the size of the front cover 30 in the width direction of the vehicle required for configuring the first lamp portion 40 and the left and right position lamp portions 60L and 60R can be reduced, and conciseness and miniaturization of the front portion of the vehicle can be improved. Preferably, a part of the left and right position lamp portions 60L and 60R is located lower than the lower edge of the first lamp portion 40. This make the front portion of the vehicle more concise and miniaturized.

Moreover, through the positional configuration of the position lamp light sources 61 L and 61 R of the present teaching, not only can the sizes of the position lamp portions 60L and 60R in the upward-downward direction be reduced, but also their sizes in the front-rear direction can be reduced, and therefore the front portion of the vehicle can be made more concise and miniaturized.

Furthermore, the shape of the first lamp portion 40 is not limited to the shape of a downward arrow shape, and other shapes such as an upward arrow shape and an upside-down trapezoid may also be applicable.

Moreover, in the embodiment, the case of the head lamp 80 and the case of the position lamp portions 60L and 60R are separate individuals, but the case of the head lamp 80 and the case of the position lamp portions 60L and 60R may also be formed as a whole.

### <Protruding portions 33L and 33R>

FIG. 7 is an enlarged front view in which a front cover 30 of the scooter-type vehicle 1 is a center according to the embodiment. As shown in FIG. 7, the front cover 30 includes protruding portions 33L and 33R, which overlap with straight lines CL and CR respectively connecting the first lamp light source 41 of the first lamp portion 40 with the left and right position lamp light sources 61 L and 61 R of the left and right position lamp portions 60L and 60R in the front view of the vehicle. Specifically, the front cover 30 includes the protruding portion 33L overlapping the straight line CL for connecting the left position lamp light source 61 L with the first lamp light source 41, and the protruding portion 33R overlapping the straight line CR for connecting the right position lamp light source 61 R with the first lamp light source 41. Furthermore, as described below, if the left and right position lamp light sources 61L and 61 R consist of a plurality of lamp bulbs or LED light emitting elements, the straight lines CL and CR may be formed by connecting one of the lamp bulbs or LED light emitting elements with the first lamp light source 41.

According to the foregoing configuration, the front cover 30 includes the protruding portions 33L and 33R overlapping with the straight lines CL and CR respectively connecting the position lamp light sources 61 L and 61 R with the first lamp light source 41, so that light from the position lamp portions 60L and 60R is not easily disturbed by light from the head lamp 80 of the first lamp portion 40, and therefore conspicuity of light from the position lamp portions 60L and 60R can become preferable.

Moreover, according to the foregoing configuration, the left and right side edges 44L and 44R of the first lamp lens 43 extend downwards and inwards from the upper portion of the first lamp lens 43 in the front view of the vehicle, and at least a part of the left position lamp portions 61 L and at least a part of the right position lamp portions 61 R are disposed between the left side edge 44L of the first lamp lens 43 and the vertical line VL passing through the upper end of the left side edge 44L of the first lamp lens and the right side edge 44R of the first lamp lens 43 and the vertical line VR passing through the upper end of the right side edge 44R of the first lamp lens (see FIG 5), so not only can the conspicuity of the light from the position lamp portions are improved, but also the size of the front cover 30 in the width direction of the vehicle can be reduced, and therefore, conciseness and miniaturization of the front portion of the scooter-type vehicle 1, and conspicuity of the position lamp can be both acquired well.

As described above, in this embodiment, the closer the side edges 44L and 44R of the first lamp portion 40 are to the bottom, the closer the side edges 44L and 44R are to the center in the width direction of the vehicle. Therefore, the lower the provided protruding portions 33L and 33R are, the closer to the inside in the width direction of the vehicle the protruding portions 33L and 33R extend. Therefore, even if the protruding portions 33L and 33R are provided between the first lamp portion 40 and the left and right position lamp portions 60L and 60R, the size of the front cover 30 in the width direction of the vehicle can also be reduced, and conciseness and miniaturization of the front portion of the vehicle can be improved.

Moreover, more preferably, the position lamp light sources 61L and 61 R of the left and right position lamp portions 60L and 60R are disposed more upwards than the lower edge 45 of the first lamp lens 43. That is, the position lamp light sources 61L and 61 R of the left and right position lamp portions 60L and 60R are all provided between the first lamp light source 41 and the lower edge 45 of the first lamp lens 43 in the upward-downward direction of the vehicle, that is, provided between the straight line UL and the straight line DL in FIG. 5, respectively.

According to the foregoing configuration, the size of the front cover 30 in the upward-downward direction can be reduced, and therefore conciseness and miniaturization of the front portion of the scooter-type vehicle 1 can be improved further.

### <Shape of the position lamp portions 60L and 60R>

As shown in FIG. 2 and FIG. 4, in the vehicle front view of the scooter-type vehicle 1, respective lower edges 65L and 65R of the left and right position lamp lenses 63L and 63R are oblique. Specifically, the lower edges 65L and 65R obliquely extend outwards in the width direction of the vehicle and upwards. That is, the lower edges 65L and 65R obliquely extend in such a manner that the closer they are to the outside of the vehicle, the higher they are. Furthermore, the lower edges 65L and 65R are not limited to straight lines. Even if the lower edges 65L and 65R are formed so as to include a circular arc edge or saw-tooth edge, as long as lines PL and PR respectively connecting the lowest ends 67L and 67R of the left and right position lamp lenses 63L and 63R with the lower ends 66L and 66R of the side edges 64L and 64R obliquely extend in a direction that extends obliquely outwards and upwards in the front view of the vehicle, the effect of the present teaching can be achieved. As shown in FIG. 4, in this embodiment, respective lower edges 65L and 65R of the left and right position lamp lenses 63L and 63R, first obliquely extend from a side close to the center of the vehicle's width outwards and downwards for a small portion of their lengths, then obliquely extend outwards and upwards, and finally obliquely extend outwards and downwards for a small portion of their lengths, but the lines PL, PR respectively connecting the lowest ends 67L and 67R of the left and right position lamp lenses 63L and 63R with respective lower ends 66L and 66R of the side edges 64L and 64R obliquely extend in a direction that extends obliquely outwards and upwards in the front view of the vehicle.

Moreover, as shown in FIG. 2 and FIG. 4, in the vehicle front view of the scooter-type vehicle 1, respective side edges 64L and 64R of the left and right position lamp lenses 63L and 63R are oblique. Specifically, the side edges 64L and 64R obliquely extend outwards in the width direction of the vehicle and upwards at an angle larger than the angle between the lines PL, PR and the horizontal line DL passing through the lowest end 50 of the first lamp lens 43. Moreover, the side edges 64L and 64R are also not limited to straight lines, and may include a circular arc edge or a saw-tooth edge. Furthermore, the side edges 64L and 64R may also vertically extend upwards.

According to the foregoing configuration, the lower edges 65L and 65R of respective position lamp lenses 63L and 63R of the left and right position lamp portions 60L and 60R extend outwards and upwards, so the size of the front cover in the width direction of the vehicle can be further reduced, and conciseness and miniaturization of the front portion of the vehicle can be improved further.

Moreover, the angles between the side edges 64L and 64R of the left and right position lamp portions 60L and 60R and the horizontal line DL are larger than the angles between the lower edges 65L and 65R and the horizontal line DL, so not only it can be ensured that the left and right position lamps are provided with the intended preferable conspicuity, but also that the width of the space required for configuration of the outside part of the left and right position lamp portions 60L and 60R can be smaller than that of the inside part, and therefore the size of the front cover 30 in the vehicle width direction can be reduced further, and conciseness and miniaturization of the front portion of the scooter-type vehicle 1 are improved further.

### <Shape of protruding portions 33L and 33R>

As long as the shape of the protruding portions 33L and 33R dictate that the lower they are located, the more they extend inwardly in the width direction of the vehicle, the efficacy of the teaching regarding conciseness and miniaturization of the front portion of the scooter-type vehicle 1 and conspicuity of the position lamp can be achieved.

Moreover, in the front view of the vehicle, lower portions of the left and right position lamp portions 60L and 60R each comprises a part of a shape with a front end tapering off towards the inside in the width direction of the vehicle. Furthermore, lower portions of the protruding portions 33L and 33R of the front cover 30 each comprises a part of a shape with a front end tapering off towards the inside in the width direction of the vehicle. As shown in FIG. 2 and FIG. 7, in this embodiment, the lower portions of the left and right position lamp portions 60L and 60R taper off towards the inside in the width direction of the vehicle and are formed to be of a shape with a front end tapering off, and the lower portions of the protruding portions 33L and 33R of the front cover 30 taper off towards the inside in the width direction of the vehicle and are formed to be of a shape with a front end tapering off.

According to the foregoing configuration, the lower portions of the left and right position lamp portions 61L and 61 R and the lower portions of the protruding portions 33L and 33R have a shape with a front end tapering off towards the inside in the width direction of the vehicle, so the sizes of the lower portions of the left and right position lamp portions 60L and 60R and the lower portions of the protruding portions 33L and 33R can be reduced, and the front portion of the scooter-type vehicle 1 can be made more concise and miniaturized.

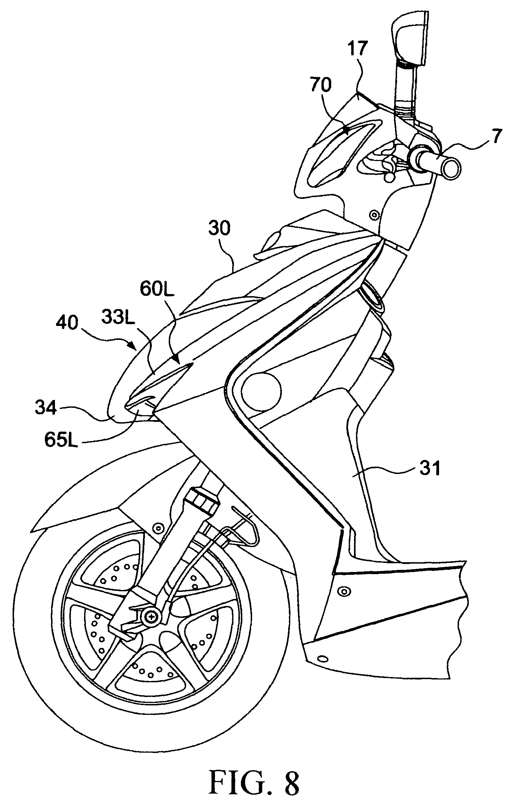

FIG. 8 is an enlarged side view of a front portion of the -scooter-type vehicle 1 according to the embodiment. As shown in FIG. 8, in the side view of the vehicle, the left and right position lamp portions 60L and 60R (the right position lamp portion 60R not shown in FIG. 8) are formed so that they obliquely extend upwards and backwards.

Moreover, as shown in FIG. 8, in the side view of the vehicle, it is preferable that at least a part of the protruding portions 33L and 33R of the front cover 30 is also provided between the left and right position lamp portions 60L and 60R and the first lamp portion 40. In this embodiment, all of the protruding portions 33L and 33R of the front cover 30 is located between the position lamp portions 60L and 60R and the first lamp portion 40. However, the present teaching is not limited to this. The protruding portions 33L and 33R may also be formed or configured so that a part of each of the protruding portions 33L and 33R is not located between the position lamp portions 60L and 60R and the first lamp portion 40. For example, the protruding portions 33L and 33R may be formed or configured in such a manner that the lower ends thereof are located lower than the lower edges 65L and 65R of the position lamp portions 60L and 60R. As a result, efficacy of the present teaching can also be achieved.

Moreover, in the side view of the vehicle, the first lamp portion 40 and the protruding portions 33L and 33R preferably comprise a part of a shape with a front end tapering off downwards and forwards. As shown in FIG. 8, in this embodiment, the protruding portions 33L and 33R are formed to taper off downwards and forwards and to have a shape with the front end tapering off (the protruding portion 33R at the right side of the vehicle not shown in FIG. 8). On the other hand, the first lamp portion 40 is provided with a part tapering off downwards and forwards and has a shape with the front end tapering off, while the front end is provided with a back-turning portion 34 turning from the bottom of the front cover 30 toward the rear of the front cover 30.

According to the foregoing configuration, the left and right position lamp portions 60L and 60R extend upwards and backwards so as to raise the position of the lower edge of the front cover 30 in the upward-downward direction, so the size of the front cover 30 in the upward-downward direction can become smaller and further facilitate conciseness and miniaturization of the front portion of the scooter-type vehicle 1. Moreover, the configuration of the protruding portion 33L and 33R may enhance conspicuity of the position lamp in the side view of the vehicle.

Furthermore, the front portions of the first lamp portion 40 and the protruding portions 33L and 33R, and the rear portions of the left and right position lamp portions 60L and 60R have a shape with the front end tapering off, so conspicuity of the position lamps 60L and 60R can be ensure on one hand, while conciseness and miniaturization of the front portion of the scooter-type vehicle 1 are improved.

### <Position lamp light sources 61 L and 61 R >

The position lamp light sources 61L and 61 R of the left and right position lamp portions 60L and 60R may use one or a plurality of lamp bulbs or LED light emitting elements, whose number is not limited. The position lamp light source 61 R of the right position lamp portion 60R shown at the left half part in FIG. 5 is an example of using a plurality of LED light emitting elements. In this embodiment, the LED light emitting elements are disposed along the lower edges 65L and 65R of the position lamp lenses 63L and 63R of the left and right position lamp portions 60L and 60R. Moreover, the LED light emitting element may be provided along the side edges 64L and 64R of the position lamp lenses 63L and 63R or along both the lower edges 65L and 65R and the side edges 64L and 64R. As described above, in the front view of the vehicle, the lower edges 65L and 65R and the side edges 64L and 64R obliquely extend outwards and upwards. Therefore, in the front view of the vehicle, the LED light emitting elements are arranged in such a manner that the closer they are to the outermost bounds of the width direction of the vehicle, the higher they are located.

According to the foregoing configuration, the closer the pluralities of LED light emitting elements, utilized as the left and right position lamp light sources 61L and 61 R, are to the outermost bounds of the width direction of the vehicle, the higher they are located, and therefore conciseness and miniaturization of the front portion of the scooter-type vehicle 1 can be improved further.

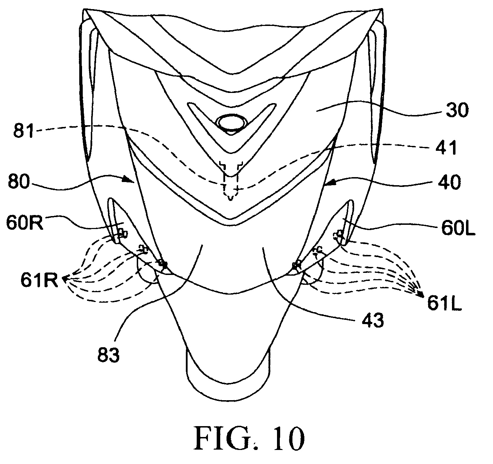

Furthermore, the plurality of LED light emitting elements utilized as the position lamp light sources 61 L and 61 R may be arranged into a row abreast in the width direction of the vehicle in the top view of the vehicle. Moreover, as shown in FIG. 10, in the top view of the vehicle, the plurality of LED light emitting elements, utilized as the position lamp light sources 61 L and 61 R, can also be disposed in a manner that the closer to the outermost bounds, the more backwards they are located. Through such configuration, the size of the front portion of the vehicle in the vehicle width direction can also be reduced, so that conciseness and miniaturization of the scooter-type vehicle 1 can be improved further.

A preferred embodiment is shown in FIG. 1 and FIG. 2. No part of the front cover 30 is provided below the first lamp portion 40 and below the position lamp portions 61 L and 61 R.

According to the foregoing configuration, the size of the front cover 30 in the upward-downward direction may be reduced so as to facilitate conciseness and miniaturization of the front portion of the scooter-type vehicle 1, and no part of the front cover 30 is disposed below the first lamp portion 40, so the illumination range below the head lamp will not be disturbed, and the ground near the front wheel 6 of the vehicle can be illuminated more brightly.

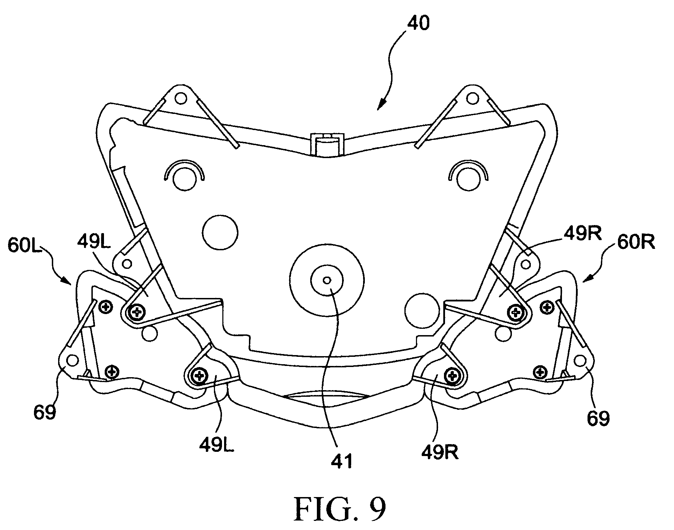

Moreover, in the preferred configuration, the left and right position lamp portions 60L and 60R are respectively fixed at both the first lamp portion 40 and the front cover 30. FIG. 9 is a rear view showing the first lamp portion 40 and the left and right position lamp portions 60L and 60R of the scooter-type vehicle 1 according to the embodiment. As shown in FIG. 9, in this embodiment, the left and right position lamp portions 60L and 60R are fixed by the fixing brackets 49R, 49L provided at the side edges 44L and 44R at the rear of the first lamp portion 40. Moreover, the left and right position lamp portions 60L and 60R are also fixed at the front cover 30 by the fixing bracket 69. Moreover, the left and right fixing positions of the first lamp portion 40 where the position lamp portions 60L and 60R are fixed may be one or both of the lower edge 45 and the side edges 44L and 44R of the first lamp portion 40.

According to the foregoing configuration, the front portion of the vehicle may be made more concise and miniaturized, and even if the rigidity of the lower portion of the front portion of the vehicle is reduced to some extent because that no part of the front cover 30 is provided below the first lamp portion 40 and below the left and right position lamp portions 60L and 60R in order not to disturb the downward illumination of the head lamp 80, the left and right position lamp portions 60L and 60R will serve as connection members, so as to compensate for the reduced rigidity, and to ensure the original rigidity of the front portion of the vehicle.

Moreover, as shown in FIG. 7, preferably, in the front view of the vehicle, the lower portion FD of the outside edge of the front cover 30 protrude more outwards in the width direction of the vehicle than the upper portion FU thereof, and the left and right position lamp portions 60L and 60R are provided at a part of the relatively protruding lower portion FD of the front cover 30.

According to the foregoing configuration, on one hand, conciseness and miniaturization of the front portion of the vehicle can be improved, while the left and right position lamp portions 60L and 60R are provided at a part, of the front cover 30, protruding more outwards in the width direction of the vehicle, so conspicuity of the vehicle width of the scooter-type vehicle 1 can be further enhanced.

Moreover, only one head lamp light source 81 is provided centrally, so light quantity decreases as distance from the head lamp light source 81 increase. The upper ends 47L and 47R of the first lamp lens 43 are at a more outwardly located position than that of the position lamp light sources 61 L and 61 R of the position lamp portions 60L and 60R, and therefore the light quantity at such position is small. The position lamp light sources 61L and 61 R are located at a more outwardly located position than a part of the first lamp lens 43, so the improvement of the conspicuity of the position lamp improves the conspicuity of the vehicle width consequently.

Moreover, according to the embodiment of the present invention, the left and right side edges of the first lamp lens extend downwards and inwards from the upper portion, and the position lamp portions 60L and 60R are provided at a more outwardly located position than the side edges 44L and 44R of the first lamp portion 40, so that even while enhancing the conciseness and miniaturization of the front portion of the vehicle, the first lamp portion 40 may still be enlarged in the upward-downward direction.

### <Another embodiment of the present invention >

FIG. 11 is an enlarged front view in which a front cover 130 of a scooter-type vehicle 1 is centered according to another embodiment. In the another embodiment shown in FIG. 11, a head lamp 180 and direction lamps 170 are integrated, and the direction lamps 170 are provided inside the head lamp 180.

In the another embodiment shown in FIG. 11, the head lamp light source 181, head lamp reflector 182, and head lamp lens 183 of the head lamp 180 included in the first lamp portion 140 are equivalent to the first lamp light source 141, the first lamp reflector 142, and the first lamp lens 143 of the present teaching, respectively.

As shown in FIG. 11, only one lamp bulb or LED light emitting element is provided in the left and right position lamp portions 160L and 160R and used as the position lamp light sources 161L and 161 R.

Moreover, in another embodiment shown in FIG. 11, a front cover 130 is provided below the head lamp 180 and the left and right position lamp portions 160L, 160R.

Furthermore, another configuration relevant to another embodiment, which is shown in FIG. 11, is the same as that of the foregoing embodiment, so an illustration of this configuration is omitted.

As shown in FIG. 11, in this embodiment, the right position lamp portion 160R is also configured in such a manner that at least a part of the position lamp light source 161R is located between the right side edge 144R of the first lamp lens 143 and the vertical line VR' passing through the upper end 147R of the right side edge 144R of the first lamp lens 143 (an angular region surrounded by the side edge 144R and the vertical line VR'). Likewise, the left position lamp portion 160L is also configured in such a manner that at least one part of the position lamp light source 161L is located between the left side edge 144L of the first lamp lens 143 and the vertical line VL' passing through the upper end 147L of the left side edge 144L of the first lamp lens 143 (an angular region surrounded by the side edge 144L and the vertical line VL').

Moreover, in the upward-downward direction of the vehicle, the left and right position lamp portions 160L, 160R are also configured in such a manner that at least a part of each of the position lamp light sources 161L and 161R is located between the first lamp light source 141 and the lower edge 145 of the first lamp lens 143 in the upward-downward direction of the vehicle. Herein, being between the first lamp light source 141 and the lower edge 145 refers to a location between the horizontal line UL' passing through the lower end of the first lamp light source 141 and the horizontal line DL' passing through the lowest end 150 of the first lamp lens 143.

In the another embodiment shown in FIG. 11, conciseness and miniaturization of the head lamp and the position lamp, conciseness and miniaturization of the front portion of the straddle-type type vehicle, and conspicuity of the position lamp can all be subject to the same improvements offered by the foregoing embodiment. Additionally, the approximate vehicle width of the straddle-type type vehicle can be identified by people around through the position lamp.

To sum up, in the embodiments as illustrated, various design changes may be made. For example, the present teaching may also be applied to a straddle-type type vehicle other than the scooter-type vehicle.

### List of Reference Numerals

- 1: scooter-type vehicle
- 2: vehicle body frame
- 3: front fork
- 4: unit swinging-type power unit
- 5: seat
- 6: front wheel
- 7: steering handle
- 8: rear wheel
- 9: tail lamp
- 10: side cover
- 11: footrest board
- 12: central cover
- 13: storage box
- 17: handle cover
- 18: engine
- 19: transmission case
- 21: head tube
- 22: down tube
- 23: lower bracket
- 24: seat rail frame
- 30: front cover
- 31: leg shield
- 32: lower cover
- 33L and 33R: protruding portion
- 40: first lamp portion
- 41: first lamp light source
- 42: first lamp reflector
- 43: first lamp lens
- 44L: left side edge
- 44R: right side edge
- 45: lower edge
- 46: upper edge
- 47L and 47R: upper end
- 48L and 48R: lower end
- 49L and 49R: fixing bracket
- 50: lowest end
- 60L: left position lamp portion
- 60R: right position lamp portion
- 61L and 61R: position lamp light source
- 62L and 62R: position lamp reflector
- 63L and 63R: position lamp lens
- 64L and 64R: side edge
- 65L and 65R: lower edge
- 66L and 66R: lower end
- 67L and 67R: lowest end
- 69: fixing bracket
- 70: direction lamp
- 80: head lamp
- 81: head lamp light source
- 82: head lamp reflector
- 83: head lamp lens
- 101: upper side cover
- 102: lower side cover
- 130: front cover
- 140: first lamp portion
- 141: first lamp light source
- 142: first lamp reflector
- 143: first lamp lens
- 144L: left side edge
- 144R: right side edge
- 145: lower edge
- 160L: left position lamp portion
- 160R: right position lamp portion
- 161L and 161R: position lamp light source
- 170: direction lamp
- 180: head lamp
- 181: head lamp light source
- 182: head lamp reflector
- 183: head lamp lens
- 230: head lamp unit
- 231: shell
- 234: lens
- 240: vehicle lamp light source
- 243: reflector
- 250: direction lamp
- 251: reflector
- 260: position lamp light source
- 261: reflector
- CL, CR: straight line
- DL, UL, DL', UL': horizontal line
- FU: upper portion
- FD: lower portion
- VL, VR, VL', VR': vertical line

## Claims

1. A straddle-type type vehicle, comprising:
a head tube (21);
a front cover (30;130) provided in front of the head tube (21);
left and right position lamp portions (60L,60R;160L,160R), provided on the front cover (30; 130) at opposite sides of a vehicle center in a width direction of the vehicle;
a first lamp portion (40;140), provided on the front cover (30;130) with at least a part of the first lamp portion (40;140) located between the left and right position lamp portions (60L,60R;160L,160R) in the width direction of the vehicle, and lightened together with the left and right position lamp portions (60L,60R;160L,160R), wherein
the left and right position lamp portions (60L,60R;160L,160R) each include a position lamp light source (61L,61R;161L,161R), a position lamp reflector (62L,62R) reflecting light of the position lamp light source (61L,61R;161L,161R), and a position lamp lens (63L,63R) provided in front of the position lamp reflector (62L,62R);
the first lamp portion (40;140) includes a first lamp light source (41;141), a first lamp reflector (42; 142) reflecting light of the first lamp light source (41;141), and a first lamp lens (43;143) provided in front of the first lamp reflector (42; 142); moreover, the first lamp lens (43;143) includes a lower edge (45;145) located lower than the first lamp light source (41;141) and the first lamp reflector (42; 142) in a front view of the vehicle;
in the front view of the vehicle, left and right side edges (44L,44R;144L,144R), of the first lamp lens (43;143), located more outwards than the first lamp light source (41;141) and the first lamp reflector (42; 142) extend downwards and inwards from an upper portion of the first lamp lens (43;143), wherein
at least a part of each of the position lamp light sources (61 L,61 R;161 L,161 R) of the left and right position lamp portions (60L,60R;160L,160R) is arranged between the first lamp light source (41;141) and the lower edge (45;145) of the first lamp lens (43;143) in an upward-downward direction of the vehicle, and arranged between the left and right side edges (44L,44R;144L,144R) of the first lamp lens (43;143) and vertical lines passing through upper ends of the left and right side edges (44L,44R;144L,144R) of the first lamp lens (43;143) in a width direction of the vehicle; **characterized in that**
the front cover (30;130) includes protruding portions (33L,33R) overlapped with straight lines (CL,CR) respectively connecting the first lamp light source (41;141) with the left and right position lamp light sources (61L,61R;161L,161R) in the front view of the vehicle.

2. A straddle-type type vehicle according to claim 1, **characterized in that** the position lamp light sources (61 L,61 R; 161 L, 161 R) are all located at a position higher than the lower edge (45;145) of the first lamp lens (43; 143).

3. A straddle-type type vehicle according to claim 1 or 2, **characterized in that** in the front view of the vehicle, at least a part of a lower edge (65L,65R) of each of the position lamp lenses (63L,63R) located lower than the position lamp light source (61 L,61 R;161 L,161 R) and the position lamp reflector (62L,62R) extends outwards in the width direction of the vehicle and extends upwards, and angles between side edges (64L,64R) of the left and right position lamp lenses (63L,63R) and a horizontal line (DL;DL') passing through the lowest end (50;150) of the first lamp lens (43;143) are respectively larger than angles between lower edges (65L,65R) of the position lamp lenses (63L,63R) and the horizontal line (DL;DL').

4. A straddle-type type vehicle according to any one of the claims 1 to 3, **characterized in that** in the front view of the vehicle, at least a part of the side edge of each of the position lamp lenses (63L,63R) located more outwards than the position lamp light source (61 L,61 R;161 L,161 R) and the position lamp reflector (62L,62R) extends outwards in the width direction of the vehicle and extends upwards.

5. A straddle-type type vehicle according to any one of the claims 1 to 4, **characterized in that** the position lamp light sources (61 L,61R; 161L, 161R) are provided with a plurality of LED light emitting elements, and in the front view of the vehicle, the more outwards located the LED light emitting elements are in the width direction of the vehicle, the higher the locations of the LED light emitting elements tend to be.

6. A straddle-type type vehicle according to any one of the claims 1 to 5, **characterized in that** in the front view of the vehicle, lower portions of the left and right position lamp portions (60L,60R;160L,160R) include a part of a shape with a front end tapering off towards the inside in the width direction of the vehicle, and lower portions of the protruding portions (33L,33R) of the front cover (30; 130) also include a part of a shape with a front end tapering off towards the inside in the width direction of the vehicle.

7. A straddle-type type vehicle according to any one of the claims 1 to 6, **characterized in that** in a side view of the vehicle, the left and right position lamp portions (60L,60R;160L,160R) extend upwards and backwards, and at least a part of each of the protruding portions (33L,33R) of the front cover (30;130) is arranged between the left and right position lamp portion and the first lamp portion (40;140).

8. A straddle-type type vehicle according to any one of the claims 1 to 7, **characterized in that** in the side view of the vehicle, the first lamp portion (40;140) and the protruding portion include a part of a shape with a front end tapering off downwards and forwards, and the left and right position lamp portions (60L,60R;160L,160R) include a part of a shape with a front end tapering off upwards and backwards.

9. A straddle-type type vehicle according to any one of the claims 1 to 8, **characterized in that** in the front view of the vehicle, the front cover (30) is completely provided above the first lamp portion (40).

10. A straddle-type type vehicle according to any one of the claims 1 to 9, **characterized in that** in the front view of the vehicle, the front cover (30) is completely provided above the left and right position lamp portions (60L,60R).

11. A straddle-type type vehicle according to any one of the claims 1 to 10, **characterized in that** the left and right position lamp portions (60L,60R;160L,160R) are respectively fixed at both the first lamp portion (40; 140) and the front cover (30;130).

12. A straddle-type type vehicle according to any one of the claims 1 to 11, **characterized in that** in the front view of the vehicle, outer ends of the left and right position lamp portions (60L,60R;160L,160R) in the width direction of the vehicle are respectively located more outwards than left and right outer ends of the first lamp portion (40; 140) in the width direction of the vehicle.

13. A straddle-type type vehicle according to any one of the claims 1 to 12, **characterized in that** in the front view of the vehicle, outside edges (44L,44R;144L,144R) of the front cover (30; 130) are configured so that lower portions thereof protrude more than upper portions thereof in the width direction of the vehicle, and the left and right position lamp portions (60L,60R;160L,160R) are provided at protruding parts of the front cover (30; 130).

14. A straddle-type type vehicle according to any one of the claims 1 to 13, **characterized in that** white system light is emitted by the first lamp portion (40;140), and white system light is emitted by the left and right position lamp portions (60L,60R;160L,160R).

## Patentansprüche

1. Ein Grätsch-Sitz-Typ-Fahrzeug, das umfasst:
ein Kopfrohr (21),
eine Front-Abdeckung (30; 130), vorgesehen vor dem Kopfrohr (21);
linke und rechte Positions-Leuchten-Abschnitte (60L; 60R; 160L; 160R), vorgesehen an der Front-Abdeckung (30; 130) an gegenüberliegenden Seiten einer FahrzeugMitte in einer Breiten-Richtung des Fahrzeugs;
einen ersten Leuchten-Abschnitt (40; 140), vorgesehen an der Front-Abdeckung (30; 130) mit zumindest einem Teil des ersten Leuchten-Abschnitts (40; 140) angeordnet zwischen den linken und rechten Positions-Leuchten-Abschnitten (60L; 60R; 160L; 160R) in der Breiten-Richtung des Fahrzeugs und aufleuchtend zusammen mit den linken und rechten Positions-Leuchten-Abschnitten (60L; 60R; 160L; 160R), wobei die linken und rechten Positions-Leuchten-Abschnitte (60L; 60R; 160L; 160R) jede eine Positions-Leuchten-Lichtquelle (61 L; 61 R; 160L; 161 R), einen Positions-Leuchten-Reflektor (62L; 62R), der Licht von der Positions-Leuchten-Lichtquelle (61 L; 61 R; 161 L; 161 R) reflektiert, und eine Positions-Leuchten-Lichtscheibe (63L; 63R) vorgesehen vor dem Positions-Leuchten-Reflektor (62L; 62R), beinhaltet;
der erste Leuchten-Abschnitt (40; 140) beinhaltet eine erste Leuchten-Lichtquelle (41; 141), einen ersten Leuchten-Reflektor (42; 142), der Licht von der ersten Leuchten-Lichtquelle (41; 141) reflektiert, und eine erste Leuchten-Lichtscheibe (43, 143), vorgesehen vor dem ersten Leuchten-Reflektor (42; 142); weiterhin beinhaltet die erste Leuchten-Lichtscheibe (43; 143) eine untere Kante (456; 145), angeordnet niedriger als die ersten Leuchten-Lichtquelle (41; 141) und der erste Leuchten-Reflektor (42; 142) in einer Vorder-Ansicht des Fahrzeugs;
in der Vorder-Ansicht des Fahrzeugs sind linke und rechte Seiten-Kanten (44L; 44R; 144L; 144R) der ersten Leuchten-Lichtscheibe (43; 143) weiter außerhalb angeordnet als die ersten Leuchten-Lichtquelle (41; 141) und der erste Leuchten-Reflektor (42; 142) erstreckt sich nach unten und innen von einem oberen Abschnitt der ersten Leuchten-Lichtscheibe (43; 143), wobei
zumindest ein Teil von jeder von den Positions-Leuchten-Lichtquellen (61 L; 61 R; 161 L; 161 R) der linken und rechten Positions-Leuchten-Abschnitte (60L; 60R; 160L; 160R) zwischen der ersten Leuchten-Lichtquelle (41; 141) und der unteren Kante (45; 145) der ersten Leuchten-Lichtscheibe (43; 143) in einer oben/unten-Richtung des Fahrzeugs angeordnet sind, und zwischen den linken und rechten Seiten-Kanten (44L; 44R, 144R, 144R) der ersten Leuchten-Lichtscheibe (43; 143) angeordnet sind, und vertikale Linien, treten durch oberen Enden der linken und rechten Seiten-Kanten (44L; 44R; 144R, 144R) der ersten Leuchten-Lichtscheibe (43; 143) in einer Breiten-Richtung des Fahrzeugs, **dadurch gekennzeichnet, dass**
die Front-Abdeckung (30; 130) beinhaltet Vorsprungs-Abschnitte (33L; 33R), überlappend mit geraden Linien (CL; CR) die jeweils die erste Leuchten-Lichtquelle (41; 141) mit den linken und rechten Positions-Leuchten-Lichtquellen (61 L; 61 R; 161 L, 161 R) in der Vorder-Ansicht des Fahrzeugs verbinden.

2. Ein Grätsch-Sitz-Typ-Fahrzeug gemäß Anspruch 1, **dadurch gekennzeichnet, dass** die Positions-Leuchten-Lichtquellen (61 L; 61 R; 161 L; 161 R) alle an Positionen höher als die untere Kante (45, 145) der ersten Leuchten-Lichtscheibe (43, 143) angeordnet sind.

3. Grätsch-Sitz-Typ-Fahrzeug gemäß Anspruch 1 oder 2, **dadurch gekennzeichnet, dass** in der Vorder-Ansicht des Fahrzeugs, zumindest ein Teil einer unteren Kante (65L;65R) von jeder der Positions-Leuchten-Lichtscheiben (63L; 63R), angeordnet niedriger als die Positions-Leuchten-Lichtquelle (61L; 61R; 161L; 161R) und der Positions-Leuchten-Reflektor (62L; 62R), sich nach außen in der Breiten-Richtung des Fahrzeugs erstreckt und nach oben erstreckt, und Winkel zwischen Seiten-Kanten (64L; 64R) der linken und rechten Positions-Leuchten-Lichtscheiben (63L; 63R) und einer horizontalen Linie (DL; DL'), die sich durch das unterste Ende (50; 150) der ersten Leuchten-Lichtscheibe erstreckt, jeweils größer sind als Winkel zwischen unteren Kanten (65L; 65R) der Positions-Leuchten-Lichtscheiben (63L; 63R) und der horizontalen Linie (DL; DL').

4. Ein Grätsch-Sitz-Typ-Fahrzeug gemäß irgendeinem der Ansprüche 1 bis 3, **dadurch gekennzeichnet, dass** in der Vorder-Ansicht des Fahrzeugs zumindest ein Teil der Seiten-Kante von jeder der Positions-Leuchten-Lichtscheibe (63L; 63R), angeordnet weiter außerhalb als die Positions-Leuchten-Lichtquelle (61 L; 61 R; 161 L; 161 R) und des Positions-Leuchten-Reflektors (62L; 62R), sich nach außen in der Breiten-Richtung des Fahrzeugs erstreckt und nach oben erstreckt.

5. Ein Grätsch-Sitz-Typ-Fahrzeug gemäß irgendeinem der Ansprüche 1 bis 4, **dadurch gekennzeichnet, dass** die Positions-Leuchten-Lichtquellen (61 L; 61 R; 161 L; 161 R) mit einer Mehrzahl von LED-Licht-Emittierenden Elementen vorgesehen sind, und in der Vorder-Ansicht des Fahrzeugs, sind je weiter außerhalb die LED-Licht-Emittierenden Elemente in der Breiten-Richtung des Fahrzeugs angeordnet sind, um so höher tendiert die Anordnungen der LED-Licht-Emittierenden Elemente.

6. Ein Grätsch-Sitz-Typ-Fahrzeug gemäß irgendeinem der Ansprüche 1 bis 5, **dadurch gekennzeichnet, dass** in der Vorder-Ansicht des Fahrzeugs, untere Abschnitte der linken und rechten Positions-Leuchten-Abschnitte (60L; 60R; 160L; 160R) einen Teil einer Form mit einem Vorder-Ende beinhalteten, das sich zu der Innenseite in der Breiten-Richtung des Fahrzeugs abschrägt, und untere Abschnitte der Vorsprungs-Abschnitte (33L; 33R) der Front-Abdeckung (30; 130) ebenso einen Teil einer Form mit einem Vorder-Ende beinhalten, das sich zu der Innenseite in der Breiten-Richtung des Fahrzeugs abschrägt.

7. Ein Grätsch-Sitz-Typ-Fahrzeug gemäß irgendeinem der Ansprüche 1 bis 6, **dadurch gekennzeichnet, dass** in einer Seiten-Ansicht des Fahrzeugs sich die linken und rechten Positions-Leuchten-Abschnitte (60L; 60R; 160L; 160R) nach oben und hinten erstrecken, um zumindest ein Teil von jedem der Vorsprungs-Abschnitte (33L; 33R) der Front-Abdeckung (30; 130) ist zwischen dem linken und rechten Positions-Leuchten-Abschnitt und dem ersten Leuchten-Abschnitt (40; 140) angeordnet.

8. Ein Grätsch-Sitz-Typ-Fahrzeug gemäß irgendeinem der Ansprüche 1 bis 7, **dadurch gekennzeichnet, dass** in einer Seiten-Ansicht des Fahrzeugs der erste Leuchten-Abschnitt (40; 140) und der Vorsprungs-Abschnitt einen Teil von einer Form mit einem Vorder-Ende beinhalted, das sich nach unten und vorne abschrägt, und die linken und rechten Positions-Leuchten-Abschnitte (60L; 60R; 160L, 160R) einen Teil von einer Form mit einem Vorder-Ende beinhalted, das sich nach oben und hinten abschrägt.

9. Ein Grätsch-Sitz-Typ-Fahrzeug gemäß irgendeinem der Ansprüche 1 bis 8, **dadurch gekennzeichnet, dass** in der Vorder-Ansicht des Fahrzeugs die Front-Abdeckung (30) vollständig oberhalb des ersten Leuchten-Abschnitts (40) vorgesehen ist.

10. Ein Grätsch-Sitz-Typ-Fahrzeug gemäß irgendeinem der Ansprüche 1 bis 9, **dadurch gekennzeichnet, dass** in der Vorder-Ansicht des Fahrzeugs die Front-Abdeckung (30) vollständig oberhalb der linken und rechten Positions-Leuchten-Abschnitte (60L; 60R) vorgesehen ist.

11. Ein Grätsch-Sitz-Typ-Fahrzeug gemäß irgendeinem der Ansprüche 1 bis 10, **dadurch gekennzeichnet, dass** die linken und rechten Positions-Leuchten-Abschnitte (60L; 60R; 160L; 160R) jeweils an beiden den ersten Leuchten-Abschnitt (40; 140) und der Front-Abdeckung (30; 130) fixiert sind.

12. Ein Grätsch-Sitz-Typ-Fahrzeug gemäß irgendeinem der Ansprüche 1 bis 11, **dadurch gekennzeichnet, dass** in der Vorder-Ansicht des Fahrzeugs äußere Enden der linken und rechten Positions-Leuchten-Abschnitte (60L; 60R; 160L; 160R) in der Breiten-Richtung des Fahrzeugs jeweils weiter außen angeordnet sind als linke und rechte äußere Enden des ersten Leuchten-Abschnitts (40; 140) in der Breiten-Richtung des Fahrzeugs.

13. Grätsch-Sitz-Typ-Fahrzeug gemäß irgendeinem der Ansprüche 1 bis 12, **dadurch gekennzeichnet, dass** in der Vorder-Ansicht des Fahrzeugs Außenseiten-Kanten (44L; 44R; 144L, 144R) der Front-Abdeckung (30; 130) konfiguriert sind, sodass untere Abschnitte derselben mehr vorstehen als obere Abschnitte derselben in der Breiten-Richtung des Fahrzeugs, und linke und rechte Positions-Leuchten-Abschnitte (60L; 60R; 160L, 160R) sind als Vorsprungs-Teile der Front-Abdeckung (30, 130) vorgesehen.

14. Ein Grätsch-Sitz-Typ-Fahrzeug gemäß irgendeinem der Ansprüche 1 bis 13, **dadurch gekennzeichnet, dass** weißes Systemlicht durch den ersten Leuchten-Abschnitt (40; 140) emitiert ist, und weißes Systemlicht ist durch die linken und rechten Positions-Leuchten-Abschnitte (60L; 60R; 160L; 160R) emitiert.

## Revendications

1. Véhicule de type à enfourcher, comportant :
un tube de direction (21) ;
un panneau frontal (30 ; 130) prévu devant le tube de direction (21) ;
des portions de feu de position (60L, 60R ; 160L, 160R) gauche et droit prévues sur le panneau frontal (30 ; 130) de part et d'autre d'un centre du véhicule dans la direction de la largeur du véhicule ;
une première portion de feu (40 ; 140), prévue sur le panneau frontal (30 ; 130), au moins une partie de la première portion de feu (40 ; 140) étant située entre les portions de feu de position gauche et droit (60L,60R ; 160L, 160R) dans la direction de la largeur du véhicule et illuminée en même temps que les portions de feu de position gauche et droit (60L,60R ; 160L, 160R), où
les portions de feu de position gauche et droit (60L,60R ; 160L, 160R) comportent chacun une source lumineuse de feu de position (61 L, 61R ; 161 L, 161 R), un réflecteur de feu de position (62L, 62R) réfléchissant la lumière de la source lumineuse de feu de position (61 L, 61 R ; 161 L, 161 R), et une lentille de feu de position (63L, 63R) prévue devant le réflecteur de feu de position (62L, 62R) ;
la première portion de feu (40 ; 140) comporte une première source lumineuse de feu (41 ; 141), un premier réflecteur de feu (42 ; 142) réfléchissant la lumière de la première source lumineuse de feu (41 ; 141), et une première lentille de feu (43 ; 143) prévue devant le premier réflecteur de feu (42 ; 142) ; en outre, la première lentille de feu (43 ; 143) comporte un bord inférieur (45 ; 145) situé plus bas que la première source lumineuse de feu (41 ; 141) et le premier réflecteur de feu (42 ; 142) dans une vue de face du véhicule ;
dans une vue de face du véhicule, les bords latéraux gauche et droit (44L, 44R ; 144L, 144R) de la première lentille de feu (43 ; 143), situés plus à l'extérieur que la première source lumineuse de feu (41 ; 141) et le premier réflecteur de feu (42 ; 142) s'étendent vers le bas et vers l'intérieur à partir d'une portion supérieure de la première lentille de feu (43 ; 143), où au moins une partie de chacune des sources lumineuses de feux de position (61 L, 61 R ; 161 L, 161 R) des portions de feu de position gauche et droit (60L, 60R ; 160L, 160R) est disposée entre la première source lumineuse de feu (41 ; 141) et le bord inférieur (45 ; 145) de la première lentille de feu (43 ; 143) dans une direction de haut en bas du véhicule, et disposée entre les bords latéraux gauche et droit (44L, 44R ; 144L, 144R) de la première lentille de feu (43 ; 143) et des lignes verticales passant à travers les extrémités supérieures des bords latéraux gauche et droit (44L, 44R ; 144L, 144R) de la première lentille de feu (43 ; 143) dans une direction de la largeur du véhicule ;
**caractérisé en ce que**
le panneau frontal (30 ; 130) comporte des portions saillantes (33L, 33R) se superposant à des lignes droites (CL, CR) reliant respectivement la première source lumineuse de feu (41 ; 141) avec les sources lumineuses de feu de position gauche et droit (61 L, 61 R ; 161 L, 161 R) dans une vue de face du véhicule.

2. Véhicule de type à enfourcher selon la revendication 1, **caractérisé en ce que** les sources lumineuses de feu de position (61 L, 61 R, 161 L, 161 R) sont toutes situées en une position plus élevée que le bord inférieur (45 ; 155) de la première lentille de feu (43 ; 143).

3. Véhicule de type à enfourcher selon la revendication 1 ou 2, **caractérisé en ce que** dans une vue de face du véhicule, au moins une partie d'un bord inférieur (65L, 65R) de chacune des lentilles de feu de position (63L, 63R) située plus bas que la source lumineuse de feu de position (61 L, 61 R, 161 L, 161 R) et le réflecteur de feu de position (62L, 62R) s'étend vers l'extérieur dans la direction de la largeur du véhicule et s'étend vers le haut, et des angles entre les bords latéraux (64L, 64R) des lentilles de feu de position gauche et droit (63L, 63R) et une ligne horizontale (DL ; DL') passant à travers l'extrémité inférieure (50 ; 150) de la première lentille de feu (43 ; 143) sont respectivement plus grands que des angles entre des bords inférieurs (65L, 65R) des lentilles de feu de position (63L, 63R) et la ligne horizontale (DL ; DL').

4. Véhicule de type à enfourcher selon l'une quelconque des revendications 1 à 3, **caractérisé en ce que** dans une vue de face du véhicule, au moins une partie du bord latéral de chacune des lentilles de feu de position (63L, 63R) située plus vers l'extérieur que la source lumineuse de feu de position (61 L, 61 R ; 161 L, 161 R) et le réflecteur de feu de position (62L, 62R) s'étend vers l'extérieur dans la direction de la largeur du véhicule et s'étend vers le haut.

5. Véhicule de type à enfourcher selon l'une quelconque des revendications 1 à 4, **caractérisé en ce que** les sources lumineuses de feu de position (61 L, 61 R ; 161 L, 161 R) sont munies d'une pluralité d'éléments émetteurs de lumière LED, et dans une vue de face du véhicule, plus les éléments émetteurs de lumière LED sont situés vers l'extérieur dans la direction de la largeur du véhicule, plus l'emplacement des éléments émetteurs de lumière LED tend à être élevé.

6. Véhicule de type à enfourcher selon l'une quelconque des revendications 1 à 4, **caractérisé en ce que** dans une vue de face du véhicule, des portions inférieures des portions de feu de position gauche et droit (60L, 60R ; 160L, 160R) comportent une partie ayant une forme telle qu'une extrémité avant s'amincit vers l'intérieur dans la direction de la largeur du véhicule, et des portions inférieures des portions saillantes (33L, 33R) du panneau frontal (30 ; 130) comportent également une partie ayant une forme telle qu'une extrémité avant s'amincit vers l'intérieur dans la direction de la largeur du véhicule.

7. Véhicule de type à enfourcher selon l'une quelconque des revendications 1 à 6, **caractérisé en ce que** dans une vue latérale du véhicule, les portions de feu de position gauche et droit (60L, 60R ; 160L, 160R) s'étendent vers le haut et l'arrière, et au moins une partie de chacune des portions saillantes (33L, 33R) du panneau frontal (30 ; 130) sont disposées entre les portions de feu de position gauche et droit et la première portion de feu (40 ; 140).

8. Véhicule de type à enfourcher selon l'une quelconque des revendications 1 à 7, **caractérisé en ce que** dans une vue latérale du véhicule, la première portion de feu (40 ; 140) et la portion saillante comportent une partie ayant une forme telle qu'une extrémité avant s'amincit vers le bas et l'avant, et les portions de feu de position gauche et droit (60L, 60R ; 160L, 160R) comportent une partie ayant une forme telle qu'une extrémité avant s'amincit vers le haut et l'arrière.

9. Véhicule de type à enfourcher selon l'une quelconque des revendications 1 à 8, **caractérisé en ce que** dans une vue de face du véhicule, le panneau frontal (30) est entièrement disposé au-dessus de la première portion de feu (40).

10. Véhicule de type à enfourcher selon l'une quelconque des revendications 1 à 9, **caractérisé en ce que** dans une vue de face du véhicule, le panneau frontal (30) est entièrement disposé au-dessus des portions de feu de position gauche et droit (60L, 60R).

11. Véhicule de type à enfourcher selon l'une quelconque des revendications 1 à 10, **caractérisé en ce que** les portions de feu de position gauche et droit (60L, 60R ; 160L, 160R) sont respectivement fixées sur la première portion de feu (40 ; 140) et le panneau frontal (30 ; 130).

12. Véhicule de type à enfourcher selon l'une quelconque des revendications 1 à 11, **caractérisé en ce que** dans une vue de face du véhicule, des extrémités extérieures des portions de feu de position gauche et droit (60L, 60R ; 160L, 160R) dans la direction de la largeur du véhicule sont respectivement situées plus vers l'extérieur que des extrémités gauche et droite extérieures de la première portion de feu (40 ; 140) dans la direction de la largeur de la véhicule.

13. Véhicule de type à enfourcher selon l'une quelconque des revendications 1 à 12, **caractérisé en ce que** dans une vue de face du véhicule, des bords extérieurs (44L, 44R ; 144L, 144R) du panneau frontal (30 ; 130) sont conçus de telle manière que leurs portions inférieures font davantage saillie que leurs portions supérieures dans la largeur du véhicule, et les portions de feu de position gauche et droit (60L, 60R ; 160L, 160R) sont disposées au niveau de parties saillantes du panneau frontal (30 ; 130).

14. Véhicule de type à enfourcher selon l'une quelconque des revendications 1 à 13, **caractérisé en ce que** de la lumière blanche est émise par la première portion de feu (40 ; 140) et de la lumière blanche est émise par les portions de feu de position gauche et droit (60L, 60R ; 160L, 160R).
